# EUROPÄISCHE PATENTSCHRIFT

(11) **EP 0 568 076 B1**
(45) Veröffentlichungstag und Bekanntmachung des Hinweises auf die Patenterteilung: **11.12.1996**
(21) Anmeldenummer: 93106992.6
(22) Anmeldetag: 29.04.1993
(51) Int. Cl.: F16L 37/088, F16L 37/32

(54) **Leckagefreie Steckverbindung**
Leak free sleeve joint
Connecteur à fiche sans fuite

(30) Priorität: 29.04.1992 DE 4214104
(43) Veröffentlichungstag der Anmeldung: 03.11.1993
(73) Patentinhaber: ARMATURENFABRIK HERMANN VOSS GMBH & CO., D-51688 Wipperfürth (DE)
(72) Erfinder: Rösch, Volker, Dr., W-4330 Mülheim/Ruhr (DE); Goller, Bernd, W-5272 Wipperfürth (DE)
(74) Vertreter: Zapf, Christoph, Dipl.-Ing.

(56) Entgegenhaltungen:
- DE-A- 2 717 908
- DE-A- 3 238 410
- GB-A- 756 608
- US-A- 2 898 130
- US-A- 2 966 371

## Beschreibung

Die vorliegende Erfindung betrifft eine Steckverbindung, insbesondere zum Einsatz bei Klimaanlagen, welche aus einem Steckerteil und einem mit diesem zu verbindenden Kupplungsteil besteht, wobei das Steckerteil im Kupplungsteil im gekuppelten Zustand mittels eines radialelastischen, durch das Kupplungsteil in eine Ringnut des Steckerteils formschlüssig eingreifenden Halteelementes arretiert ist und beidseitig der Ringnut eine umfangsgemäße Abdichtung zwischen dem Steckerteil und dem Kupplungsteil gegeben ist.

Es sind Steckverbindungen für Schlauch- und Rohrleitungen in der Klimatechnik bekannt, die aus einem Steckerteil und einem Kupplungsteil bestehen, wobei das Steckerteil mit einem Steckerzapfen in einen Einsteckabschnitt des Kupplungsteil dichtend eingesteckt wird und in der Kupplungslage arretierbar ist. Hierbei besitzen das Steckerteil und das Kupplungsteil durchgehend offene, in der Kupplungslage ineinander übergehende Strömungskanäle. Die Arretierung zwischen Steckerteil und Kupplungsteil erfolgt mit den unterschiedlichsten Mitteln, beispielsweise Arretierbügeln oder Klammern. Bei derartig bekannten Steckverbindungen ist es von Nachteil, daß aufgrund der durchgehend offenen Strömungskanäle beim Trennen des Kupplungsstegs Kühlmedium austreten kann, auch wenn zuvor die Leitungen drucklos geschaltet worden sind, da stets zumindest das sich in den Leitungen befindende Volumen des Kühlmediums entweicht. Hierdurch kommt es einerseits zu einem Verlust von Kühlmedium und andererseits ist dies aus Umweltgesichtspunkten nicht mehr tolerierbar. Dies ist beispielsweise bei einer durch die DE-A-27 17 908 bekannten Kupplung der eingangs beschriebenen Art der Fall.

Es sind auch bereits Steckkupplungen bekannt, deren Kupplungsteile mit federbelasteten Rückschlagventilen ausgerüstet sind, die sich im gesteckten Zustand gegenseitig gegen Federkraft öffnen, und die beim Entkuppeln selbsttätig durch die Federkraft schließen. Eine solche Kupplung ist aus der DE-A-32 38 410 bekannt. Diese Kupplung ist im Bereich der Rückschlagventile, und zwar speziell im Bereich der die axiale Beweglichkeit bewirkenden Führung der Ventilstößel bzw. der Ventilköpfe relativ kompliziert ausgebildet. Denn dabei ist jeweils der Ventilkopf mit einem sich axial erstreckenden Schaft verbunden, der seinerseits in einem Sternkörper verschiebbar geführt ist. Die Schließfeder ist hierbei zwischen dem Ventilkopf und dem Sternkörper angeordnet. Diese Ausgestaltung führt wegen der relativ vielen Einzelteile zu einer aufwendigen Fertigung und Montage.

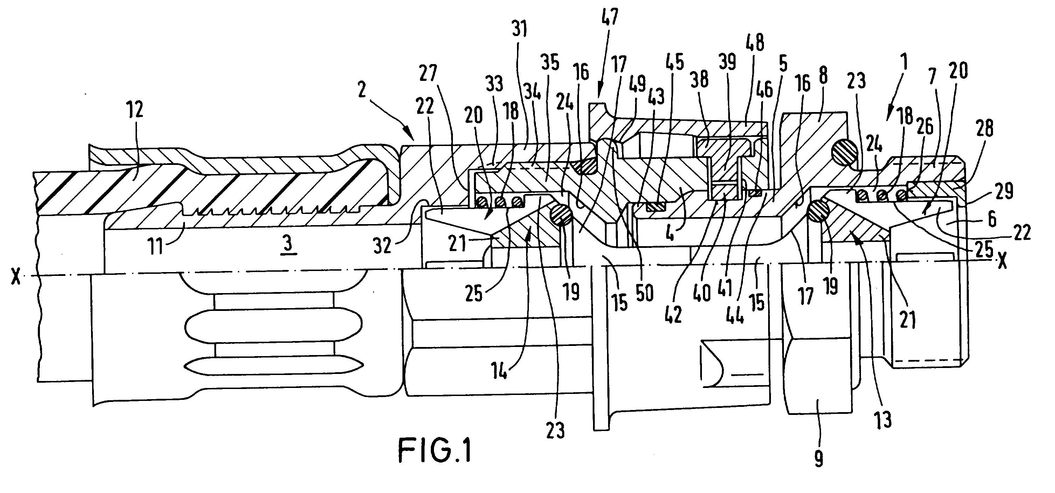

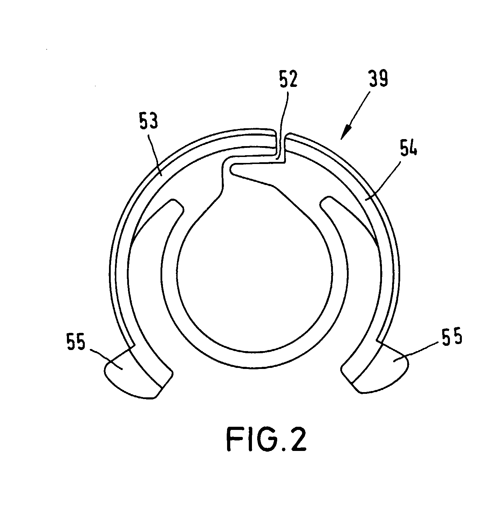

Die US-A-2 898 130 beschreibt ebenfalls eine bekannte Steckkupplung mit Rückschlagventilen. Jedoch wirkt ein dort als Halteelement vorhandene Drahtsprengring nicht formschlüssig, sondern lediglich kraftformschlüssig mit Ringnuten des Steckers zusammen, und es ist auch nur eine einseitige Abdichtung über einen O-Ring vorgesehen. Über die Art der Verschiebeführung der Ventilelemente ist nichts genaues offenbart. Da in den Fig. 1 und 2 Schaftelemente zu erkennen sind, die mit den Ventilköpfen verbunden sowie auch von Federn koaxial umschlossen sind, ist zu vermuten, daß es sich dabei um eine der DE-A-32 38 410 entsprechende Lösung handelt.

Ausgehend von diesem Stand der Technik liegt der vorliegenden Erfindung die Aufgabe zugrunde, die Steckverbindung der gattungsgemäßen Art so zu verbessern, daß die genannten Nachteile beseitigt und insbesondere ein Austreten von Medium im entkuppelten und gekuppelten Zustand mit Hilfe konstruktiv und herstellungsmäßig besonders einfacher Mittel vermieden wird.

Erfindungsgemäß wird dies dadurch erreicht, daß - zunächst in an sich bekannter Weise - einerseits im Steckerteil und andererseits im Kupplungsteil jeweils eines von zwei Rückschlagventilen derart ausgebildet und zueinander angeordnet ist, daß die Rückschlagventile im gekuppelten Zustand sich gegenseitig öffnen und im entkuppelten Zustand - bedingt durch jeweils eine Schließfeder - geschlossen sind, wobei jedes Rückschlagventil einen in einem Strömungskanal axialbeweglichen und dichtend mit einem Ventilsitz zusammenwirkenden Ventilstößel aufweist, der in Anpassung an den Ventilsitz einen Ventilkopf mit einer mit dem Ventilsitz zusammenwirkenden Dichtfläche besitzt. Dabei ist nun aber erfindungswesentlich, daß jeder Ventilkopf der Dichtfläche gegenüberliegend einen aus Radialstegen bestehenden Führungskörper aufweist und sich eine Schraubenfeder als Schließfeder einseitig an dem Führungskörper und anderseitig an einer Ringfläche des Steckerteils bzw. des Kupplungsteils abstützt.

Durch diese erfindungsgemäße Ausgestaltung wird erreicht, daß jeweils der Ventilkopf mit dem hauptsächlich aus Radialstegen bestehenden Führungskörper eine Einheit bildet, die aufgrund der besonderen Abstützung der Schließfeder insgesamt in axialer Richtung verschiebbar ist. Hierdurch vereinfacht sich vor allem die Montage erheblich, da für jedes Ventil praktisch nur noch zwei Teile in das entsprechende Gehäuse eingesetzt zu werden brauchen, und zwar die Schließfeder und die aus dem Ventilkopf und dem damit einheitlich verbundenen Führungskörper bestehende Einheit.

Weiterhin kann es erfindungsgemäß vorgesehen sein, daß das Halteelement umfangsgemäß verriegelt ist, so daß ein unwillkürliches Lösen der erfindungsgemäßen Steckverbindung ausgeschlossen ist.

Vorteilhafte Ausführungen der Erfindung sind in den Unteransprüchen enthalten.

Anhand des in der beiliegenden Zeichnung dargestellten Ausführungsbeispiels wird die Erfindung näher erläutert. Es zeigen:
- Fig. 1: im oberen Abschnitt einen Längsschnitt durch eine erfindungsgemäße Steckverbindung im eingekuppelten Zustand und im unteren Abschnitt eine Ansicht der erfindungsgemäßen Steckverbindung,
- Fig. 2: eine Ansicht eines Haltelementes der Steckverbindung gemäß Fig. 1.

Eine erfindungsgemäße Steckverbindung besteht aus einem Steckerteil 1 und einem Kupplungsteil 2. Das Kupplungsteil 2 weist einen durchgehenden Strömungskanal 3 und einen Einsteckabschnitt 4 auf, in den das Steckerteil 1 mit seinem Steckerzapfen 5 umfangsgemäß dichtend einsteckbar ist. Das Steckerteil 1 besitzt ebenfalls einen durchgehenden Strömungskanal 6. Dem Steckerzapfen 5 axial in der Längsachse X-X der Steckverbindung gegenüberliegend weist das Steckerteil 1 einen Außengewindeabschnitt 7 auf. Zwischen dem Steckerzapfen 5 und dem Außengewindeabschnitt 7 ist ein Ringbund 8 mit äußeren Schlüsselflächen 9 ausgebildet. Das Kupplungsteil 2 besitzt dem Einsteckabschnitt 4 axial gegenüberliegend einen Anschlußdorn 11, auf den eine Schlauchleitung 12 oder dergleichen aufschiebbar ist.

Erfindungsgemäß weisen sowohl das Steckerteil 1 als auch das Kupplungsteil 2 je ein Rückschlagventil 13, 14 auf. Diese beiden Rückschlagventile 13, 14 sind derart ausgebildet, daß im entkuppelten Zustand des Stecker- und Kupplungsteils 1, 2 die Ventile 13, 14 geschlossen sind. Diese Rückschlagventile 13, 14 weisen jeweils einen in dem Strömungskanal 6 (Steckerteil) bzw. dem Strömungskanal 3 (Kupplungsteil) axial beweglichen Ventilstößel 15 auf, der dichtend mit je einem Ventilsitz 16 zusammenwirkt. Der Ventilsitz 16 ist hierzu konisch ausgebildet, und jeder Ventilstößel 15 besitzt in Anpassung hieran einen konischen Ventilkopf 17. Die beiden Ventilstößel 15 sind in der Kupplungsstellung einander gegenüberliegend axial fluchtend angeordnet und haben eine derartige Länge, daß sie stirnseitig aneinanderstoßen und hierdurch gegen die Kraft einer Schließfeder 18 die Ventilköpfe 17 jeweils von dem zugeordneten Ventilsitz 16 abheben. Demnach befinden sich die Rückschlagventile 13, 14 in der Kupplungsstellung, in der der Steckerzapfen 5 in den Einsteckabschnitt 4 eingesteckt ist, in ihrer Öffnungsstellung. Zweckmäßigerweise besitzen die Ventilköpfe 17 in ihrer Dichtfläche eine O-Ring-Dichtung 19. Dem Ventilstößel 15 gegenüberliegend weisen die Ventilköpfe 17 einen Führungskörper 20 auf, der aus insbesondere drei jeweils um 120° versetzten Radialstegen 21 besteht, an deren äußeren Enden eine Zylinderhülse 22 angeformt ist. Diese Zylinderhülse 22 weist jeweils einen sich an den Ventilsitz 16 anschließenden Führungsbund 23 auf, dessen Außendurchmesser etwa dem Innendurchmesser eines Führungsabschnittes 24 des Steckerteils 1 bzw. des Kupplungsteils 2 angepaßt ist, der sich jeweils an den Ventilsitz 16 in Öffnungsrichtung der Rückschlagventile 14, 15 anschließt. Dem Führungsbund 23 folgt ein im Durchmesser verringerter Aufnahmeabschnitt 25, der konzentrisch von einer die Schließfeder 18 bildenden Spiralfeder umgeben ist, die sich einseitig am Führungsbund 23 und anderseitig an einer Ringfläche 26, 27 des Steckerteils 1 bzw. des Kupplungsteils 2 abstützt. Diese Ringfläche 26 wird im Steckerteil 1 von einem Einsatzkörper 28 gebildet, der konzentrisch zum Außengewindeabschnitt 7 in das Steckerteil 1 einseitig eingesetzt, beispielsweise eingeschraubt oder eingesteckt, ist. Der Innendurchmesser des Einsatzkörpers 28 ist größer/gleich dem Außendurchmesser der Zylinderhülse 22. Der Einsatzkörper 28 weist einen inneren Ringbund 29 an seinem der Spiralfeder abgekehrten, vorderen Ende auf, der als Anschlag für die Zylinderhülse 22 dient. Vor dem Einsetzen des Einsatzkörpers 28 wird in das Steckerteil der Ventilstößel mit der zugeordneten Spiralfeder eingebracht und dann anschließend das Steckerteil endseitig mit dem Einsatzkörper 28 verschlossen. Die zur Montage des Rückschlagventils im Kupplungsteil 2 erforderliche Zweiteiligkeit wird beim Kupplungsteil dadurch erreicht, daß an dem dem Einsteckabschnitt 4 zugekehrten Ende des Anschlußdorns 11 ein Einschraubabschnitt 31 ausgebildet ist, dessen Innenbohrung zwei Durchmesserstufen aufweist, und zwar eine sich an den Strömungskanal 3 des Anschlußdorns 11 unmittelbar anschließende erste Stufe 32, deren Innendurchmesser größer/gleich dem Außendurchmesser der Zylinderhülse 22 des Rückschlagventils 14 ist, und eine zweite Gewindestufe 33 mit einem gegenüber der ersten Stufe vergrößerten Durchmesser, die ein Innengewinde 34 besitzt. In diese Gewindestufe 33 ist ein Außengewindefortsatz 35 einschraubbar, in dem der Ventilsitz 16 und mit dem der den Einsteckabschnitt 4 aufweisende Kupplungsabschnitt einstückig ausgebildet ist. Der Innendurchmesser der Durchgangsbohrung des Außengewindefortsatzes 35 ist im Bereich vor dem Ventilsitz 16 größer/gleich dem Außendurchmesser des Führungsbundes 23 der Zylinderhülse 22. Die Spiralfeder 18 des Rückschlagventils 14 stützt sich im montierten Zustand einerseits am Führungsbund 23 und andererseits an der Stufenfläche 27 der Gewindestufe 33 ab. Die Arretierung des Steckerzapfens 5 im eingesteckten Zustand im Einsteckabschnitt 4 erfolgt mittels eines ringförmigen Halteelementes 39, das mit kreisbogenförmig ausgebildeten Arretierungsfortsätzen 40 radial durch entsprechende radiale Öffnungen 41 in der Wandung des Einsteckabschnittes 4 in dessen Innenbohrung hineinragt. Das ringförmige Halteelement 39 ist vorzugsweise einseitig radial geschlitzt, so daß es radial federelastisch aufweitbar ist. In dem Steckerzapfen 5 befindet sich eine Ringnut 42, in die das Halteelement 39 mit seinen Arretierungsfortsätzen 40 formschlüssig einrastet, wie in der Figur dargestellt ist. Aufgrund der radialen Aufweitbarkeit des Halteelementes 39 wird dieses beim Einstecken des Steckerzapfens 5 gespreizt, bis die Ringnut 42 in den Bereich des Halteelementes 39 kommt, so daß dieses zurückfedern und mit seinen Arretierungsfortsätzen 40 in die Ringnut 42 einrasten kann. Das Halteelement 39 weist einen äußeren Kopfsteg 38 auf, der breiter ist als die Öffnungen 41, so daß diese vollständig abgedeckt werden. Gleichzeitig dienen Nocken an diesem Kopfsteg 38 als Handhabe zum Spreizen des Halteelementes 39, wenn die Steckverbindung gelöst werden soll.

Der Steckerzapfen 5 besitzt zwei Schaftabschnitte, und zwar einen in Einsteckrichtung vorderen Abschnitt 43, der vor der Ringnut 42 endet, und einen zweiten, hinteren Abschnitt 44 mit einem größeren Außendurchmesser als der des vorderen Abschnittes 43, in dem die Ringnut 42 liegt und der bis zum Ringbund 8 reicht. Der Übergang zwischen dem vorderen und hinteren Abschnitt ist als Schrägfläche ausgebildet. Erfindungsgemäß ist weiterhin vorgesehen, daß in der Umfangsfläche des vorderen Abschnittes 43 eine O-Ring-Dichtung 45 angeordnet ist und ebenfalls im hinteren Abschnitt 44 hinter der Ringnut 42 und vor dem Ringbund 8 eine weitere O-Ring-Dichtung 46. Somit erfolgt eine zweifache Umfangsabdichtung im Bereich des Einsteckabschnitts 4, und zwar beidseitig der Ringnut 42.

In weiterer Ausgestaltung der Erfindung wird das Halteelement in der Arretierungsstellung durch eine dieses umfangsgemäß umschließende Kappe 47 verriegelt. Diese Kappe 47 besitzt einen in der Verriegelungsstellung den Kopfsteg 38 umfassenden, zylindrischen Innenteil 48 und weist am gegenüberliegenden Ende eine innere Ringnut 49 auf, in die ein Ringbund 50 des Kupplungsteils 2 einrastet, wodurch eine Verschiebearretierung der Kappe 47 in der Verriegelungsstellung erreicht wird.

Zwischen dem zylindrischen Innenteil 48 und der Ringnut 49 verringert sich die Wandstärke der Kappe in Richtung auf die Ringnut 49, wodurch sich eine vergrößerte radiale Elastizität der Kappe in diesem Bereich ergibt, so daß einerseits die Kappe radial federelastisch auf dem Halteelement 39 und dem Ringbund 50 aufliegt und andererseits aber zum Abziehen und Aufschieben radial geweitet werden kann.

Wie weiterhin der Figur zu entnehmen ist, sind zusätzliche O-Ring-Dichtungen im Bereich des Außengewindefortsatzes 35 sowie im Bereich des Außengewindeabschnittes 7 vorgesehen.

In Fig. 2 ist das Halteelement 39 dargestellt. Dies ist als federelastischer Ring ausgebildet, der durch einen labyrinthförmig ausgebildeten, etwa radialen Schlitz 52 unterbrochen ist. Der Ring besitzt zwei angeformte Federarme 53, 54, die etwa im Bereich des Schlitzes 52 beginnen und zusammen einen Kreisbogen bilden, der größer als 180° ist, wodurch der Ring verliersicher festgelegt ist.

Beim Einschieben des Steckerzapfens 5 drückt dieser gegen die Innenwandung des Ringes und spreizt diesen auseinander. Beim weiteren Hineinschieben schnappt dieser, da er bestrebt ist, seine ursprüngliche Lage wieder einzunehmen, in die Ringnut 42 ein. Bei der Demontage wird das Halteelement 39 so weit gespreizt, bis es nicht mehr in der Ringnut 42 liegt, so daß der Steckerzapfen 5 freigegeben wird und herausgezogen werden kann. An den äußeren Enden der Federarme 53, 54 sind Griffnocken 55 ausgebildet, mittels denen das Halteelement besonders einfach unmittelbar von Hand gespreizt werden kann.

Die vorliegende erfindungsgemäße Steckverbindung besteht vorzugsweise aus Aluminium.

## Patentansprüche

1. Steckverbindung, insbesondere zum Einsatz bei Klimaanlagen, bestehend aus einem Steckerteil (1) und einem mit diesem zu verbindenden Kupplungsteil (2), wobei das Steckerteil (1) im Kupplungsteil (2) im gekuppelten Zustand mittels eines radialelastischen, durch das Kupplungsteil (2) in eine Ringnut (42) des Steckerteils (1) formschlüssig eingreifenden Halteelementes (39) arretiert ist und beidseitig der Ringnut (42) eine umfangsgemäße Abdichtung (45,46) zwischen dem Steckerteil (1) und dem Kupplungsteil (2) gegeben ist, **dadurch gekennzeichnet**, daß einerseits im Steckerteil (1) und andererseits im Kupplungsteil (2) jeweils eines von zwei Rückschlagventilen (13,14) derart ausgebildet und zueinander angeordnet ist, daß die Rückschlagventile (13,14) im gekuppelten Zustand sich gegenseitig öffnen und im entkuppelten Zustand - bedingt durch jeweils eine Schließfeder (18) - geschlossen sind, wobei jedes Rückschlagventil (13,14) einen in einem Strömungskanal (3,6) axialbeweglichen und dichtend mit einem Ventilsitz (16) zusammenwirkenden Ventilstößel (15) aufweist, der in Anpassung an den Ventilsitz (16) einen Ventilkopf (17) mit einer mit dem Ventilsitz (16) zusammenwirkenden Dichtfläche besitzt, wobei jeder Ventilkopf (17) der Dichtfläche gegenüberliegend einen aus Radialstegen (21) bestehenden Führungskörper (20) aufweist und sich eine Schraubenfeder als Schließfeder (18) einseitig an dem Führungskörper (20) und anderseitig an einer Ringfläche (26,27) des Steckerteils (1) bzw. des Kupplungsteils (2) abstützt.

2. Steckverbindung nach Anspruch 1,
**dadurch gekennzeichnet**, daß der Ventilsitz (16) konisch ausgebildet ist und jeder Ventilstößel (15) in Anpassung hieran einen konischen Ventilkopf (17) besitzt und die beiden Ventilstößel (15) in der Kupplungsstellung einander gegenüberliegend axial fluchtend angeordnet sind und eine derartige Länge besitzen, daß sie stirnseitig aneinanderstoßen und hierdurch gegen die Kraft der Schließfeder (18) die Ventilköpfe (17) jeweils von dem zugeordneten Ventilsitz (16) abheben.

3. Steckverbindung nach Anspruch 1 oder 2,
**dadurch gekennzeichnet**, daß die Ventilköpfe (17) in ihrer Dichtfläche eine O-Ring-Dichtung (19) besitzen und der Führungskörper (20) der Ventilköpfe (17) aus insbesondere drei jeweils um 120° versetzten Radialstegen (21) besteht, an deren äußeren Enden eine Zylinderhülse (22) angeformt ist.

4. Steckverbindung nach Anspruch 3
**dadurch gekennzeichnet**, daß die Zylinderhülse (22) jeweils einen sich an den Ventilsitz (16) anschließenden Führungsbund (23) aufweist, dessen Außendurchmesser etwa dem Innendurchmesser eines Führungsabschnittes (24) des Steckerteils (1) bzw. des Kupplungsteils (2) angepaßt ist, der sich jeweils an den Ventilsitz (16) in Öffnungsrichtung des Rückschlagventils (14, 15) anschließt.

5. Steckverbindung nach Anspruch 4,
**dadurch gekennzeichnet**, daß dem Führungsbund (23) ein im Durchmesser verringerter Aufnahmeabschnitt (25) folgt, der konzentrisch von der die Schließfeder (18) bildenden Spiralfeder umgeben ist.

6. Steckverbindung nach Anspruch 5,
**dadurch gekennzeichnet**, daß die Ringfläche (26) im Steckerteil (1) von einem Einsatzkörper (28) gebildet ist, der konzentrisch zu einem Außengewindeabschnitt (7) des Steckerteils (1) gegenüberliegend einseitig eingesetzt ist, wobei der Innendurchmesser des Einsatzkörpers (28) größer/gleich dem Außendurchmesser der Zylinderhülse (22) ist.

7. Steckverbindung nach Anspruch 6,
**dadurch gekennzeichnet**, daß der Einsatzkörper (28) einen Ringbund (29) an seinem der Spiralfeder (18) abgekehrten vorderen Ende aufweist, der als Anschlag für die Zylinderhülse (22) dient.

8. Steckverbindung nach einem der Ansprüche 1 bis 7,
**dadurch gekennzeichnet**, daß das Kupplungsteil (2) einen durchgehenden Strömungskanal (3) und einen Einsteckabschnitt (4) aufweist, in den das Steckerteil (1) mit seinem Steckerzapfen (5) umfangsgemäß dichtend einsteckbar ist und das Steckerteil (1) ebenfalls einen durchgehenden Strömungskanal (6) aufweist, wobei dem Steckerzapfen (5) axial in der Längsachse (X-X) der Steckverbindung gegenüberliegend das Steckerteil (1) einen Außengewindeabschnitt (7) besitzt und zwischen dem Steckerzapfen (5) und dem Außengewindeabschnitt (7) ein Ringbund (8) mit äußeren Schlüsselflächen (9) ausgebildet ist und das Kupplungsteil (2) dem Einsteckabschnitt (4) axial gegenüberliegend einen Anschlußdorn (11) aufweist, auf den eine Schlauchleitung (12) aufschiebbar ist.

9. Steckverbindung nach einem der Ansprüche 1 bis 8,
**dadurch gekennzeichnet**, daß das Kupplungsteil (2) zweiteilig ausgebildet ist, indem an dem dem Einsteckabschnitt (4) zugekehrten Ende des Anschlußdorns (11) ein Einschraubabschnitt (31) ausgebildet ist, dessen Innenbohrung zwei Durchmesserstufen aufweist, und zwar eine sich an den Strömungskanal (3) des Anschlußdorns (11) unmittelbar anschließende erste Stufe (32), deren Innendurchmesser grösser/gleich dem Außendurchmesser der Zylinderhülse (22) des Rückschlagventils (14) ist, und eine zweite Gewindestufe (33) mit einem gegenüber der ersten Stufe vergrößerten Durchmesser, die ein Innengewinde (34) besitzt.

10. Steckverbindung nach Anspruch 9,
**dadurch gekennzeichnet**, daß in die Gewindestufe (33) ein Außengewindefortsatz (35) einschraubbar ist, in dem der Ventilsitz (16) und mit dem der den Einsteckabschnitt (4) aufweisende Kupplungsabschnitt einstückig ausgebildet ist.

11. Steckverbindung nach einem der Ansprüche 1 bis 10,
**dadurch gekennzeichnet**, daß sich die Spiralfeder (18) des Rückschlagventils (14) im montierten Zustand einerseits am Führungsbund (23) und andererseits an der Stufenfläche (27) der Gewindestufe (33) abstützt.

12. Steckverbindung nach einem der Ansprüche 1 bis 11,
**dadurch gekennzeichnet**, daß die Arretierung des Steckerzapfens (5) im eingesteckten Zustand im Einsteckabschnitt (4) mittels eines ringförmigen Halteelementes (39) erfolgt, der mit kreisbogenförmig ausgebildeten Arretierungsfortsätzen (40) radial durch entsprechende radiale Öffnungen (41) in der Wandung des Einsteckabschnittes (4) in dessen Innenbohrung hineinragt und in eine Ringnut (42) im Steckerzapfen (5) formschlüssig einrastet.

13. Steckverbindung nach Anspruch 12,
**dadurch gekennzeichnet**, daß das ringförmige Halteelement (39) einseitig radial geschlitzt ist.

14. Steckverbindung nach Anspruch 12 oder 13,
**dadurch gekennzeichnet**, daß das Halteelement (39) einen äußeren Kopfsteg (38) aufweist, der breiter ist als die Öffnungen (41) in der Wandung des Einsteckabschnittes (4), so daß diese vollständig abgedeckt werden.

15. Steckverbindung nach einem der Ansprüche 1 bis 14,
**dadurch gekennzeichnet**, daß der Steckerzapfen (5) zwei Schaftabschnitte, und zwar einen in Einsteckrichtung vorderen Abschnitt (43), der vor der Ringnut (42) endet, und einen zweiten hinteren Abschnitt (44) mit einem größeren Außendurchmesser als der des vorderen Abschnittes (43) aufweist, und in dem Abschnitt (43) die Ringnut (42) liegt.

16. Steckverbindung nach Anspruch 15,
**dadurch gekennzeichnet**, daß der Übergang zwischen dem vorderen Abschnitt (43) und dem hinteren Abschnitt (44) als Schrägfläche ausgebildet ist.

17. Steckverbindung nach einem der Ansprüche 1 bis 16,
**dadurch gekennzeichnet**, daß in der Umfangsfläche des vorderen Abschnittes (43) des Steckerzapfens (5) eine O-Ring-Dichtung (45) und im hinteren Abschnitt (44) des Steckerzapfens (5) hinter der Ringnut (42) und vor dem Ringbund (8) eine weitere O-Ring-Dichtung (46) angeordnet ist.

18. Steckverbindung nach einem der Ansprüche 1 bis 17,
**dadurch gekennzeichnet**, daß das Halteelement (39) in der Arretierungsstellung durch eine dieses umfangsgemäß umschließende Kappe (47) verriegelt ist.

19. Steckverbindung nach Anspruch 18,
**dadurch gekennzeichnet**, daß die Kappe (47) einen die Verriegelungsstellung (38) umfassenden zylindrischen Innenteil (48) besitzt und am gegenüberliegenden Ende eine innere Ringnut (49) aufweist, in die ein Ringbund (50) des Kupplungsteils (2) in der Arretierungsstellung einrastet.

20. Steckverbindung nach Anspruch 18 oder 19,
**dadurch gekennzeichnet**, daß zwischen dem zylindrischen Innenteil (48) und der Ringnut (49) sich die Wandstärke der Kappe (47) in Richtung auf die Ringnut (49) verringert.

## Claims

1. A plug-type connection, in particular for use in air-conditioning equipment, comprising a plug part (1) and a coupling part (2) to be connected thereto, the plug part (1) being locked in the coupling part (2) in the coupled condition by means of a radially elastic holding element (39) which engages with form fit, through the coupling part (2), with an annular groove (42) in the plug part (1), and a peripheral seal (45, 46) being provided on both sides of the annular groove (42) between the plug part (1) and the coupling part (2), characterized in that on the one hand in the plug part (1) and on the other hand in the coupling part (2) there is respectively one of two non-return valves (13, 14) constructed and arranged in relation to one another such that the non-return valves (13, 14) open towards one another in the coupled condition and are closed - brought about by a respective closing spring (18) - in the uncoupled condition, each non-return valve (13, 14) having a valve plunger (15) which is axially movable in a flow channel (3, 6) and cooperates in sealing manner with a valve face (16) and, matched to the valve face (16), has a valve head (17) with a sealing surface which cooperates with the valve face (16), each valve head (17) having opposite the sealing surface a guide element (20) comprising radial webs (21), and a helical spring acting as the closing spring (18) being supported at one end against the guide element (20) and at the other end against an annular surface (26, 27) of the plug part (1) and of the coupling part (2) respectively.

2. A plug-type connection according to Claim 1, characterized in that the valve face (16) is of conical construction and each valve plunger (15) has, matched to the latter, a conical valve head (17) and the two valve plungers (15) are arranged axially flush opposite one another in the coupled position and have a length such that they each abut against the end face of the other and consequently raise the valve heads (17) away from the respectively associated valve face (16) in opposition to the force of the closing spring (18).

3. A plug-type connection according to Claim 1 or 2, characterized in that the valve heads (17) have in their sealing surface an O-ring seal (19) and the guide element (20) of the valve heads (17) comprises in particular three radial webs (21) each offset by 120°, a cylindrical sleeve (22) being integrally formed on the outer ends of the radial webs.

4. A plug-type connection according to Claim 3, characterized in that the cylindrical sleeve (22) has in each case a guide collar (23) which adjoins the valve face (16) and whereof the external diameter is approximately matched to the internal diameter of a guide section (24) of the plug part (1) and of the coupling part (2) respectively, this guide section (24) adjoining the valve face (16) in the direction of opening of the non-return valve (14, 15) in each case.

5. A plug-type connection according to Claim 4, characterized in that the guide collar (23) is followed by a receiving section (25) of reduced diameter which is concentrically surrounded by the helical spring forming the closing spring (18).

6. A plug-type connection according to Claim 5, characterized in that the annular surface (26) in the plug part (1) is formed by an insert element (28) which is inserted, opposite at one end, concentrically with respect to an externally threaded section (7) of the plug part (1), the internal diameter of the insert element (28) being greater than or equal to the external diameter of the cylindrical sleeve (22).

7. A plug-type connection according-to Claim 6, characterized in that the insert element (28) has an annular collar (29) at its front end remote from the helical spring (18) which serves as a stop for the cylindrical sleeve (22).

8. A plug-type connection according to one of Claims 1 to 7, characterized in that the coupling part (2) has a flow channel (3), which runs throughout, and an insertion section (4) into which the plug part (1) may be inserted with peripheral sealing by means of its plug pin (5), and the plug part (1) also has a flow channel (6) which runs throughout, the plug part (1) having, axially opposite the plug pin (5) along the longitudinal axis (X-X) of the plug-type connection, an externally threaded section (7), and there being constructed between the plug pin (5) and the externally threaded section (7) an annular collar (8) with external key surfaces (9), and the coupling part (2) having axially opposite the insertion section (4) a connection spike (11) onto which a flexible line (12) may be pushed.

9. A plug-type connection according to one of Claims 1 to 8, characterized in that the coupling part (2) is constructed in two parts in that there is constructed at the end of the connection spike (11) facing the insertion section (4) a screw-in section (31) whereof the internal bore has two diameter steps, namely a first step (32) directly adjoining the flow channel (3) of the connection spike (11), its internal diameter being greater than or equal to the external diameter of the cylindrical sleeve (22) of the non-return valve (14), and a second, threaded step (33) having a diameter larger than the first step and having an internal thread (34).

10. A plug-type connection according to Claim 9, characterized in that there may be screwed into the threaded step (33) an externally threaded extension piece (35) in which the valve face (16) is constructed and with which the coupling section having the insertion section (4) is constructed as one piece.

11. A plug-type connection according to one of Claims 1 to 10, characterized in that the helical spring (18) of the non-return valve (14) is supported in the mounted condition at one end against the guide collar (23) and at the other end against the step surface (27) of the threaded step (33).

12. A plug-type connection according to one of Claims 1 to 11, characterized in that the plug pin (5) is locked in the insertion section (4) in the inserted condition by means of a ring-shaped holding element (39) which projects by means of arcuate locking extension pieces (40) radially through corresponding radial openings (41) in the wall of the insertion section (4) into the internal bore thereof, and latches with form fit in an annular groove (42) in the plug pin (5).

13. A plug-type connection according to Claim 12, characterized in that the ring-shaped holding element (39) is slotted radially on one side.

14. A plug-type connection according to Claim 12 or 13, characterized in that the holding element (39) has an outer head web (38) which is broader than the openings (41) in the wall of the insertion section (4), so that the latter are completely covered.

15. A plug-type connection according to one of Claims 1 to 14, characterized in that the plug pin (5) has two shaft sections, namely a front section (43), as seen in the direction of insertion, which ends in front of the annular groove (42), and a second rear section (44) having a larger external diameter than that of the front section (43), in which section (43) the annular groove (42) is made.

16. A plug-type connection according to Claim 15, characterized in that the transition between the front section (43) and the rear section (44) is constructed as a sloping surface.

17. A plug-type connection according to one of Claims 1 to 16, characterized in that in the peripheral surface of the front section (43) of the plug pin (5) there is arranged an O-ring seal (45), and in the rear section (44) of the plug pin (5) behind the annular groove (42) and in front of the annular collar (8) there is arranged a further O-ring seal (46).

18. A plug-type connection according to one of Claims 1 to 17, characterized in that the holding element (39) is blocked in the locked position by a cap (47) peripherally surrounding the holding element (39).

19. A plug-type connection according to Claim 18, characterized in that the cap (47) has a cylindrical inner part (48) surrounding the blocking position (38) and, at the opposite end, an inner annular groove (49) in which an annular collar (50) of the coupling part (2) latches in the locked position.

20. A plug-type connection according to Claim 18 or 19, characterized in that the wall thickness of the cap (47) becomes smaller between the cylindrical inner part (48) and the annular groove (49) in the direction of the annular groove (49).

## Revendications

1. Connecteur, en particulier pour installations de climatisation, comprenant un élément de fiche (1), et un élément d'accouplement (2), l'élément de fiche (1) étant bloqué, dans l'état accouplé, dans l'élément d'accouplement (2) au moyen d'un élément de maintien (39) radialement élastique s'emboîtant de par sa forme, par l'élément d'accouplement (2) dans une rainure annulaire (42) de l'élément de fiche (1), un étanchement périphérique (45, 46) étant obtenu de part et d'autre de la rainure annulaire (42) entre l'élément de fiche (1) et l'élément d'accouplement (2),
caractérisé en ce que, d'une part dans l'élément de fiche (1), et d'autre part, dans l'élément d'accouplement (2), sont formées respectivement deux soupapes anti-retour (13, 14), agencées l'une par rapport à l'autre de manière à ce qu'à l'état accouplé, elles s'ouvrent mutuellement et qu'à l'état désaccouplé, elles sont fermées grâce à un ressort de fermeture respectif (18), chaque soupape anti-retour (13, 14) comportant un poussoir (15) axialement mobile dans un canal de circulation (3, 6), et coopérant de manière étanche avec un siège de soupape (16), ce poussoir présentant en correspondance au siège de soupape (16) une tête de soupape (17) avec une surface d'étanchéité coopérant avec le siège de soupape (16), chaque tête de soupape (17) présentant, en regard de la surface d'étanchéité, un corps de guidage (20) consistant en des nervures radiales (21), un ressort hélicoïdal qui sert de ressort de fermeture (18) s'appuyant par une extrémité sur le corps de guidage (20), et par l'autre extrémité sur une surface annulaire (26, 27) de l'élément de fiche (1) ou de l'élément d'accouplement (2).

2. Connecteur selon la revendication 1,
caractérisé en ce que le siège de soupape (16) a une forme conique, chaque poussoir de soupape (15) présentant en correspondance une tête de soupape conique (17), et en ce qu'en position accouplée, les deux poussoirs (15) sont disposés en regard et axialement alignés, leur longueur étant telle que leurs faces frontales entrent en contact et séparent ainsi les têtes de soupape (17) des sièges de soupape (16) respectivement associés, à l'encontre du ressort de fermeture (18).

3. Connecteur selon la revendication 1 ou 2,
caractérisé en ce que les têtes de soupape (17) comportent un joint torique (19) dans leur surface d'étanchéité, et que le corps de guidage (20) des têtes de soupape (17) consiste en particulier en trois nervures radiales (21) respectivement décalées de 120°, une alvéole cylindrique (22) étant formée sur les extrémités extérieures de ces nervures.

4. Connecteur selon la revendication 3,
caractérisé en ce que l'alvéole cylindrique (22) présente respectivement un collier de guidage (23) faisant suite au siège de soupape (16), dont le diamètre extérieur est sensiblement adapté au diamètre intérieur d'une portion de guidage (24) de l'élément de fiche (1) ou de l'élément d'accouplement (2) qui fait suite au siège de soupape (16) dans la direction d'ouverture de la soupape anti-retour (14, 15).

5. Connecteur selon la revendication 4,
caractérisé en ce que le collier de guidage (23) est suivi d'une portion de réception (25) de plus petit diamètre, entourée concentriquement par le ressort hélicoïdal constituant le ressort de fermeture (18).

6. Connecteur selon la revendication 5,
caractérisé en ce que la surface annulaire (26) de l'élément de fiche (1) est formée par un corps (28) inséré d'un côté concentriquement par rapport à une portion de filet extérieur (7) de l'élément de fiche (1), et en regard de celle-ci, le diamètre intérieur du corps inséré (28) étant supérieur ou identique au diamètre extérieur de l'alvéole cylindrique (22).

7. Connecteur selon la revendication 6,
caractérisé en ce que le corps inséré (28) présente à son extrémité antérieure opposée au ressort hélicoïdal (18) un collier annulaire (29) qui sert de butée à l'alvéole cylindrique (22).

8. Connecteur selon l'une des revendications 1 à 7,
caractérisé en ce que l'élément d'accouplement (2) comporte un canal de circulation traversant (3), et une portion d'enfichage (4) dans laquelle une broche (5) de l'élément de fiche (1) peut être enfichée avec étanchéité périphérique, et que l'élément de fiche (1) comporte également un canal de circulation traversant (6), l'élément de fiche (1) comprenant axialement en regard de la broche (5), dans l'axe longitudinal (X-X) du connecteur, une portion à filet extérieur (7), un collier annulaire (8) à surfaces clés extérieures (9) étant formé entre la broche (5) et la portion à filet extérieur (7), l'élément d'accouplement (2) présentant, axialement en regard de la portion d'enfichage (4), un goujon de connexion (11) sur lequel on peut emboîter un tuyau flexible (12).

9. Connecteur selon l'une des revendications 1 à 8,
caractérisé en ce que l'élément d'accouplement (2) est formé de deux parties, une portion d'introduction par vissage (31) étant formée à l'extrémité du goujon de connexion (11) qui est en regard de la portion d'enfichage (4), l'alésage intérieur de cette portion d'introduction par vissage présentant deux redans de diamètre différent, un premier redan (32) faisant immédiatement suite au canal de circulation (3) du goujon de connexion (11), le diamètre intérieur de ce redan étant supérieur ou égal au diamètre extérieur de l'alvéole cylindrique (22) de la soupape anti-retour (14), et un deuxième redan à filet (33) de diamètre supérieur à celui du premier redan, et muni d'un taraudage (34).

10. Connecteur selon la revendication 9,
caractérisé en ce qu'un prolongement à filet extérieur (35) dans lequel est formé le siège de soupape (16) peut être vissé dans le redan à filet (33), la portion d'accouplement qui présente la portion d'enfichage (4) étant formée d'une pièce avec ce prolongement.

11. Connecteur selon l'une des revendications 1 à 10,
caractérisé en ce que le ressort hélicoïdal (18) de la soupape anti-retour (14) s'appuie à l'état monté d'un côté sur le collier de guidage (23), et de l'autre côté, sur la surface (27) du redan à filet (33).

12. Connecteur selon l'une des revendications 1 à 11,
caractérisé en ce que le blocage de la broche d'enfichage (5) à l'état enfiché est effectué dans la portion d'enfichage (4) au moyen d'un élément de maintien annulaire (39) dont les prolongements de blocage en arc de cercle (40) font radialement saillie dans l'alésage intérieur, à travers des ouvertures radiales correspondantes (41) de la paroi de la portion d'enfichage (4), et qui se bloque de par sa forme dans une rainure annulaire (42) de la broche d'enfichage (5).

13. Connecteur selon la revendication 12,
caractérisé en ce que l'élément de maintien annulaire (39) est fendu radialement d'un côté.

14. Connecteur selon la revendication 12 ou 13,
caractérisé en ce que l'élément de maintien (39) présente une nervure de tête extérieure (38) qui est plus large que les ouvertures (41) de la paroi de la portion d'enfichage (4) de manière à ce que ces dernières soient totalement recouvertes.

15. Connecteur selon l'une des revendications 1 à 14,
caractérisé en ce que la broche d'enfichage (5) présente deux portions de tige, à savoir une portion antérieure dans la direction d'enfichage (43) qui se termine avant la rainure annulaire (42), et une deuxième portion postérieure (44) à plus grand diamètre extérieur que celui de la portion antérieure (43), et la rainure annulaire (42) étant située dans la portion (43).

16. Connecteur selon la revendication 15,
caractérisé en ce que la transition entre la portion antérieure (43) et la portion postérieure (44) a la forme d'une surface oblique.

17. Connecteur selon l'une des revendications 1 à 16,
caractérisé en ce qu'un joint torique (45) est disposé dans la périphérie de la portion antérieure (43) de la broche d'enfichage (5), un autre joint torique (46) étant disposé dans la portion postérieure (44) de la broche d'enfichage (5), derrière la rainure annulaire (42) et avant le collier annulaire (8).

18. Connecteur selon l'une des revendications 1 à 17,
caractérisé en ce que l'élément de maintien (39) est verrouillé dans la position de blocage par un capot (47) qui entoure sa périphérie.

19. Connecteur selon la revendication 18,
caractérisé en ce que le capot (47) présente une portion cylindrique intérieure (48) qui entoure la nervure de tête (38) dans la position de verrouillage et, à l'extrémité en regard, une rainure annulaire intérieure (49) dans laquelle se bloque un collier annulaire (50) de l'élément d'accouplement (2) dans la position de blocage.

20. Connecteur selon la revendication 18 ou 19,
caractérisé en ce que, entre la portion cylindrique intérieure (48) et la rainure annulaire (49), l'épaisseur de la paroi du capot (47) diminue dans la direction de la rainure annulaire (49).
